# DEMANDE DE BREVET EUROPEEN

(11) **EP 0 860 228 A1**
(43) Date de publication de la demande: **26.08.1998**
(21) Numéro de dépôt: 98420033.7
(22) Date de dépôt: 20.02.1998
(51) Int. Cl.: B23D 21/04, B21D 17/04, B21D 19/00

(54) **Machine pour la coupe et/ou l'usinage de tubes**

(30) Priorité: 21.02.1997 FR 9702322
(71) Demandeur: Davis, Jean-Claude, 01800 Meximieux (FR)
(72) Inventeur: Davis, Jean-Claude, 01800 Meximieux (FR)
(74) Mandataire: Bratel, Gérard

(57) **Abrégé**

La machine est destinée notamment à la coupe de tubes de section ronde et de faible épaisseur. Elle possède un bâti (1), des moyens de serrage (30,31) du tube à couper (29), une carcasse extérieure (7) entraînée en rotation et un fourreau intérieur (15), montés coaxialement, traversés par le tube (29), et aptes à décrire une rotation relative limitée sous l'action de moyens de commande (17 à 28). Sur la carcasse (7) sont montées des porte-outils oscillants (11), recevant chacun un outil de coupe (13), tous les outils étant situés dans un même plan (P), sur un même cercle. Le fourreau intérieur (15) porte une couronne dentée (16), en prise avec des pignons (14) liés en rotation avec les différents porte-outils (11), qui peuvent ainsi décrire un mouvement synchronisé de "plongée".

## Description

La présente invention concerne une machine pour la coupe et/ou l'usinage de tubes. Plus particulièrement, cette machine est destinée à la coupe de tubes de section ronde et de relativement faible épaisseur, mais elle s'applique aussi à d'autres opérations, telles que le chanfreinage, l'expansion ou la formation de gorges, à réaliser sur de tels tubes. L'invention est notamment applicable à la coupe de tubes métalliques, tels que des tubes en acier, en acier inoxydable même réfractaire, en aluminium, en laiton ou en cuivre. Le mot "coupe" désigne ici une section complète effectuée dans un plan perpendiculaire à l'axe du tube concerné, et permettant de sectionner ce tube en tronçons selon toute longueur désirée.

D'une manière classique, la coupe de tubes s'effectue au moyen d'une scie volante ; ce procédé comporte les inconvénients suivants :
- Il est difficile de couper les tubes de façon rigoureusement perpendiculaire à leur axe.
- Le risque de déformation des tubes, et de formation de bavures, est important.
- Le cycle de coupe possède une durée importante, et le procédé est irrationnel, puisque la scie doit traverser entièrement, c'est-à-dire sur tout son diamètre, le tube à couper qui est en fait un corps creux, dont seule la paroi doit être coupée.

On connaît aussi un procédé de coupe de tubes par utilisation de molettes, en général au nombre de deux. Ce procédé conduit aussi à une déformation du tube, avec un rétreint dû à la pression des molettes, et il oblige à réusiner l'extrémité des tronçons de tube séparés par la coupe.

Un autre procédé de coupe de tubes consiste en un cisaillage avec utilisation d'un mandrin intérieur. Ce procédé écrouit le tube sur une longueur d'environ 1mm de chaque côté du plan de coupe, et les tronçons de tube ainsi coupés ne peuvent être utilisés directement pour la réalisation d'évasements ou d'autres configurations, en raison des risques de rupture.

Enfin on connaît, par le brevet français N° 2522292 du même Inventeur, un principe de coupe de tubes par une "scie annulaire", formée par une couronne à denture intérieure, traversée par le tube à sectionner, qui est à la fois entraînée en rotation autour de son propre axe, et déplacée dans son plan tout autour du tube suivant un mouvement de "satellite". Une telle scie n'est pas appropriée pour la coupe de tubes à parois minces.

La présente invention vise à éviter tous ces inconvénients, en fournissant une machine pour la coupe et/ou l'usinage de tubes, de conception différente et nouvelle, permettant notamment une coupe rapide, précise et sans déformation telle que marquage ou ovalisation, procurant directement un très bel aspect de la surface de coupe, permettant d'effectuer la coupe à un prix de revient minimum, autorisant des réglages et changements d'outils très faciles et très rapides, et possédant ainsi une application polyvalente, tout en s'adaptant particulièrement à la coupe de tubes à paroi mince.

A cet effet, la machine pour la coupe et/ou l'usinage des tubes, objet de l'invention, comprend essentiellement et en combinaison :
- des moyens de serrage du tube à couper, fixant la position de l'axe de ce tube,
- un fourreau rotatif intérieur et une carcasse ou fourreau rotatif extérieur, montés coaxialement et pouvant être traversés par le tube à couper, le fourreau intérieur étant apte à décrire une rotation limitée, relativement au fourreau extérieur,
- au moins un porte-outil monté oscillant sur la carcasse ou fourreau extérieur, autour d'un axe parallèle à l'axe du tube à couper,
- un ou des outils de coupe et/ou d'usinage, monté(s) sur l'extrémité, tournée vers l'axe du tube couper, du ou des porte-outils oscillants,
- des moyens d'entraînement en rotation continue de la carcasse ou fourreau extérieur autour de son axe,
- des moyens de commande de la position angulaire relative du fourreau intérieur et de la carcasse ou fourreau extérieur,
- une couronne dentée solidaire du fourreau intérieur, et venant en prise avec un ou des pignons ou des secteurs dentés liés en rotation,respectivement, avec le ou les porte-outils.

Dans une forme de réalisation préférée de l'invention, les moyens de commande de la position angulaire relative du fourreau intérieur et de la carcasse ou fourreau extérieur comprennent un fourreau intermédiaire, mobile en translation axiale par rapport au fourreau extérieur mais lié en rotation avec ce dernier, tandis qu'une liaison de type hélicoïdal réunit le fourreau intermédiaire au fourreau intérieur, ledit fourreau intermédiaire étant prolongé au delà des autres fourreaux, et son prolongement étant lié en translation, par l'intermédiaire d'un palier, avec une couronne de commande non rotative, elle-même liée à un actionneur, tel que vérin hydraulique, apte à la déplacer en translation. La couronne de commande peut être articulée à deux leviers de commande latéraux, opposés l'un à l'autre, qui sont eux-mêmes articulés d'une part à des parties latérales du bâti de la machine, et d'autre part à la partie mobile du vérin, telle que la tige de ce vérin.

De préférence, il est prévu une pluralité de porte-outils montés oscillants à intervalles angulaires réguliers sur la carcasse ou fourreau extérieur, et une pluralité d'outils de coupe et/ou d'usinage correspondants disposés en cercle dans un même plan, perpendiculaire à l'axe du tube.

On réalise ainsi notamment une machine pour la coupe de tubes, qui comprend une série d'outils de coupe disposés concentriquement, l'ensemble des outils de coupe tournant autour du tube à couper et "attaquant" ce tube de façon simultanée, en des points régulièrement répartis autour de sa circonférence. Ce principe permet une coupe rapide, régulière et silencieuse, compte tenu de la disposition des outils et de leur faible course nécessaire à la coupe complète d'un tube, le résultat étant d'autant meilleur que les moyens de serrage du tube peuvent être situés près du plan contenant tous les outils de coupe.

Ces outils de coupe se présentent avantageusement comme des plaquettes de coupe fixées de manière démontable aux extrémités des porte-outils oscillants respectifs, le nombre des porte-outils oscillants et des outils de coupe étant compris entre deux et dix ; ainsi la machine comporte par exemple six ou huit porte-outils, donc six ou huit outils de coupe séparés selon le cas par des intervalles angulaires de 60° ou de 45°. L'utilisation de plaquettes de coupe et de chanfreinage permet, simultanément à la coupe, de "casser" l'angle extérieur situé à l'extrémité d'un tronçon de tube.

Le mouvement oscillant des porte-outils permet l'approche des outils de coupe vers le tube en début de cycle, puis l'enfoncement des outils dans l'épaisseur du tube, en cours de coupe, et enfin le dégagement de ces outils, en fin de cycle. Ce mouvement oscillant permet aussi de placer les mêmes outils de coupe sur un cercle de diamètre plus ou moins important, pour adapter la machine à des tubes à couper de divers diamètres (à l'intérieur de certaines limites), sans aucune modification de cette machine. Le mécanisme à couronne dentée et pignons "satellites" permet un mouvement et un positionnement parfaitement synchronisés de tous les porte-outils, donc de tous les outils de coupe, le mécanisme de commande étant conçu pour permettre la modification de position radiale des outils au cours de leur rotation autour de l'axe du tube à couper.

On notera aussi que la machine pour la coupe et/ou l'usinage de tubes, objet de l'invention, possède en raison de sa conception "coaxiale" un encombrement particulièrement réduit, au regard de sa capacité et du temps de coupe très faible.

En résumé, la machine pour la coupe et/ou l'usinage de tubes, objet de l'invention, présente une tête de coupe rotative, portant une série d'outils de coupe ayant un mouvement de "plongée" rigoureusement synchronisé et fonctionnant, en quelque sorte, comme un diaphragme d'appareil photographique.

Dans la mesure où cette tête de coupe est démontable et interchangeable, elle peut être avantageusement remplacée par une autre tête comportant au moins un porte-outil oscillant qui porte un outil en forme de molette, prévu pour la formation de gorges à l'intérieur d'une extrémité d'un tronçon de tube. Un tel outil réalise un usinage particulier du tube, par déformation de sa matière, en creusant une gorge qui peut recevoir de la brasure ou un joint tonique.

De toute façon, l'invention sera bien comprise à l'aide de la description qui suit, en référence au dessin schématique annexé représentant, à titre d'exemples, quelques formes d'exécution de cette machine pour la coupe de tubes :
Figure 1 est une vue d'ensemble, en coupe longitudinale, d'une machine pour la coupe de tubes conforme à la présente invention ;
Figure 2 est une vue de face de cette machine, montrant plus particulièrement les porte-outils et les outils de coupe, dans deux positions correspondant à deux diamètres de tubes à couper ;
Figure 3 montre le détail d'un des outils de coupe visibles sur la figure 2 ;
Figure 4 est une vue d'ensemble, en coupe longitudinale, d'une autre machine pour la coupe de tubes conforme à la présente invention, adaptée aussi à d'autres opérations d'usinage ;
Figure 5 est une vue de face de la tête de coupe de la machine de figure 4, montrant les porte-outils et les outils de coupe dans une première position ;
Figure 6 est une vue similaire à figure 5, mais correspondant à une autre position des porte-outils et des outils de coupe ;
Figure 7 est une vue en coupe longitudinale partielle de la machine de figure 4, équipée d'une tête avec outil de formation de gorges ;
Figure 8 est une vue de face de cette tête, avec son porte-outil et son outil de formation de gorges.

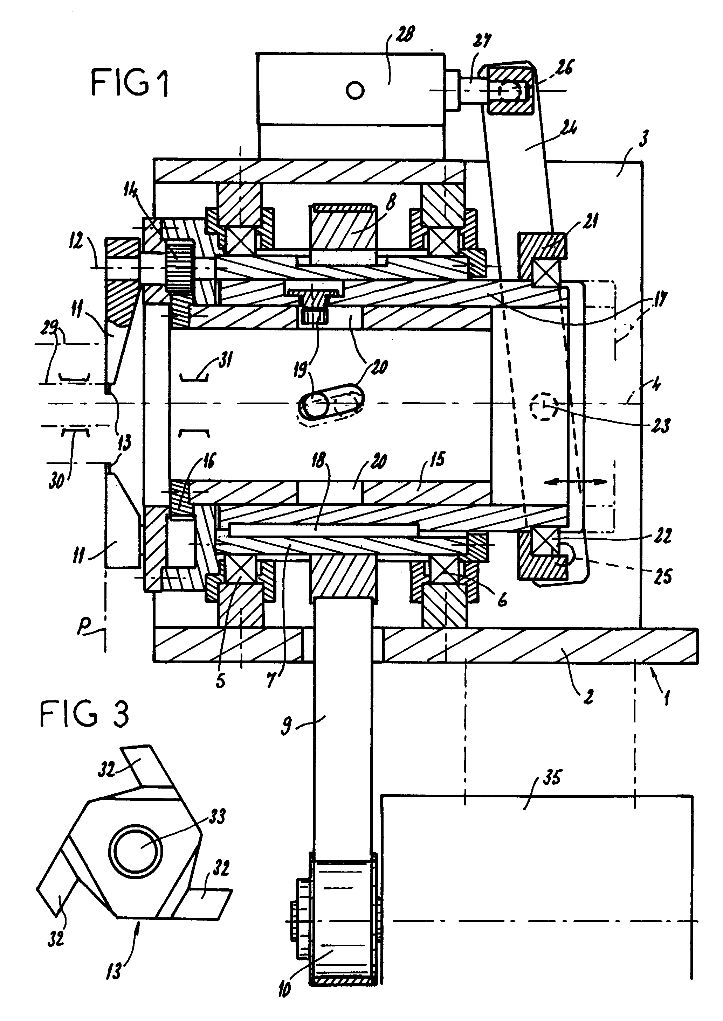

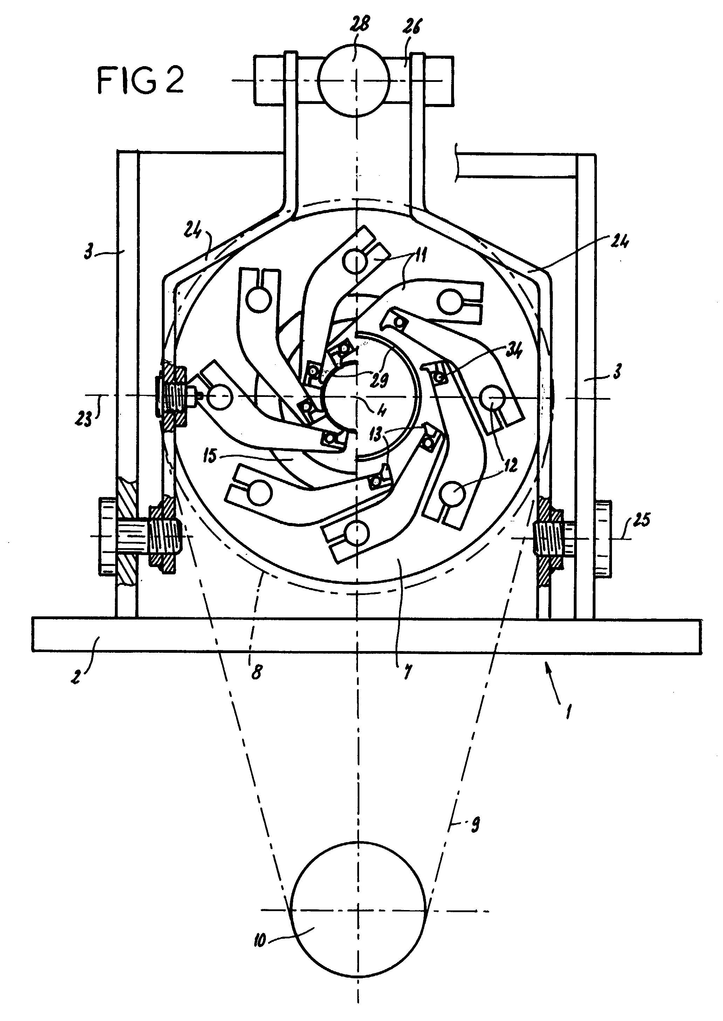

Sur les figures 1 et 2 est représentée schématiquement une machine pour la coupe de tubes, qui possède un bâti 1 composé principalement d'une table support 2 et de deux joues latérales opposées 3, l'ensemble du bâti 1 étant réglable en hauteur pour permettre un travail suivant un axe horizontal 4 constant. Sur le bâti 1 est monté tournante suivant l'axe 4, par l'intermédiaire de paliers 5 et 6, une carcasse extérieure cylindrique ou fourreau extérieur 7. Sur le fourreau extérieur 7 est fixée extérieurement une poulie 8, sur laquelle s'enroule une courroie crantée d'entraînement 9 qui passe aussi sur une poulie d'entraînement 10, elle-même accouplée à un moteur électrique 35. La courroie d'entraînement 9 passe ici entre les deux paliers 5 et 6. Cette courroie est remplaçable par une chaîne sans fin de précision, passant sur des roues ou couronnes dentées appropriées.

A l'une de ses extrémités, le fourreau extérieur 7 porte une série de porte-outils 11, montés oscillants autour d'axes 12 situés à intervalles angulaires réguliers, sur un même cercle coaxial à l'axe horizontal 4, tous les axes 12 étant parallèles à cet axe horizontal 4. Chaque porte-outil oscillant 11 se présente comme un bras, de forme coudée, dont une extrémité est tournée vers l'axe 4 et reçoit un outil de coupe et/ou de chanfreinage 13. Dans l'exemple illustré au dessin, les porte-outils 11 et les outils de coupe 13 associés sont au nombre de huit, donc séparés par des intervalles angulaires de 45°. Sur l'axe d'oscillation 12 de chaque porte-outil est calé un pignon "satelitte" 14.

La machine comprend aussi, disposé suivant l'axe horizontal 4, un fourreau intérieur 15 rotatif qui porte, à l'une de ses extrémités, une couronne dentée 16 venant en prise avec les différents pignons 14, respectivement associés aux porte-outils 11.

Entre le fourreau extérieur 7 et le fourreau intérieur 15 il est prévu encore un fourreau intermédiaire 17, lequel dépasse au-delà des fourreaux 7 et 15, à son extrémité éloignée des porte-outils 11. Le fourreau intermédiaire 17 est monté mobile en translation mais lié en rotation, suivant l'axe 4, par rapport au fourreau extérieur 7, grâce à un dispositif à clavette 18. Une liaison hélicoïdale est réalisée entre le fourreau intermédiaire 17 et le fourreau intérieur 15 ; cette liaison hélicoïdale résulte de doigts ou de galets 19, portés par le fourreau intermédiaire 17 et tournés vers l'intérieur de ce dernier, qui sont introduits dans des lumières obliques respectives 20 ménagées dans le fourreau intérieur 15. Ainsi, une translation du fourreau intermédiaire 17 suivant l'axe 4 s'accompagne d'une rotation limitée du fourreau intérieur 15 par rapport au fourreau intermédiaire 17, donc aussi par rapport au fourreau extérieur 7.

Un mécanisme permet de commander la translation axiale du fourreau intermédiaire 17, alors même que celui; ci tourne avec le fourreau extérieur 7. Ce mécanisme comprend une couronne de commande 21, non rotative, liée par l'intermédiaire d'un palier 22 à la partie dépassante du fourreau intermédiaire 17. La couronne 21 est articulée, autour d'un axe transversal, à des points intermédiaires 23 de deux leviers de commande latéraux opposés 24, eux-mêmes articulés par leurs extrémités inférieures aux deux joues latérales 3 du bâti 1, autour d'un axe fixe 25. Les extrémités supérieures respectives des deux leviers de commande 24 sont rapprochées, et attelées par un axe 26 à la tige 27 d'un vérin hydraulique 28, d'axe sensiblement horizontal.

En cours d'utilisation de la machine, le tube à couper 29 est disposé suivant l'axe 4, et il traverse ainsi coaxialement l'ensemble des trois fourreaux 7, 15 et 17. Des organes de serrage 30 et 31, du genre "étau", représentés très schématiquement, maintiennent le tube 29 de part et d'autre du plan vertical P, perpendiculaire à l'axe 4, dans lequel se situent les outils de coupe 13.

La mise en marche du moteur 35 de la machine permet, par l'intermédiaire de la courroie crantée 9, l'entraînement en rotation continue et simultanée des trois fourreaux 7, 15 et 17 autour de l'axe horizontal 4, et par conséquent la rotation continue des porte-outils 11 et des outils de coupe 13 autour du tube à couper 29.

De plus, en actionnant le vérin 28, il est possible de déplacer axialement le fourreau intermédiaire 17 d'une manière contrôlée, en provoquant ainsi une rotation relative, sur un angle limité, de ce fourreau intermédiaire 17 par rapport au fourreau intérieur 15. Au cours d'une telle rotation relative, la couronne dentée 16 solidaire du fourreau intérieur 15 provoque une mise en rotation simultanée, et selon un même angle, de tous les pignons "satellites" 14, donc un mouvement de pivotement synchronisé de tous les porte-outils 11. Les outils de coupe 13 peuvent ainsi être amenés sur un cercle de plus ou moins grand diamètre.

En pratique, les outils de coupe 13 sont initialement placés sur un cercle de grand diamètre, permettant l'introduction du tube à couper 29. Ensuite, les outils de coupe 13 sont animés d'un mouvement d'approche rapide, jusqu'à ce qu'ils viennent "attaquer" la paroi du tube à couper 29. Puis les outils 13 se resserrent encore et s'enfoncent progressivement dans la paroi du tube 29, tout en tournant autour de ce tube, de manière à y creuser un sillon annulaire et, finalement, à couper entièrement le tube. De préférence, l'action des outils de coupe 13 est encore poursuivie, avec des outils de configuration appropriée, pour la réalisation d'une finition et notamment d'un chanfreinage extérieur, aux extrémités des tronçons de tube séparés par l'opération de coupe. Enfin, les outils de coupe et/ou de chanfreinage 13 effectuent un retour rapide vers la position de départ, en étant éloignés de l'axe 4. Des butées réglables, ici non représentées, permettent de régler les positions extrêmes des porte-outils 11 et des outils de coupe 13, donc l'amplitude de leur mouvement de "plongée" pour s'adapter au diamètre et à l'épaisseur du tube à couper 29.

Comme l'illustre la figure 2, la même machine permet ainsi, avec des positions convenablement réglées des porte-outils 11, d'effectuer la coupe de tubes 29 de relativement faible diamètre (partie gauche de la figure) ou de tubes 29 de relativement grand diamètre (partie droite de la figure), tous diamètres intermédiaires étant évidemment acceptés.

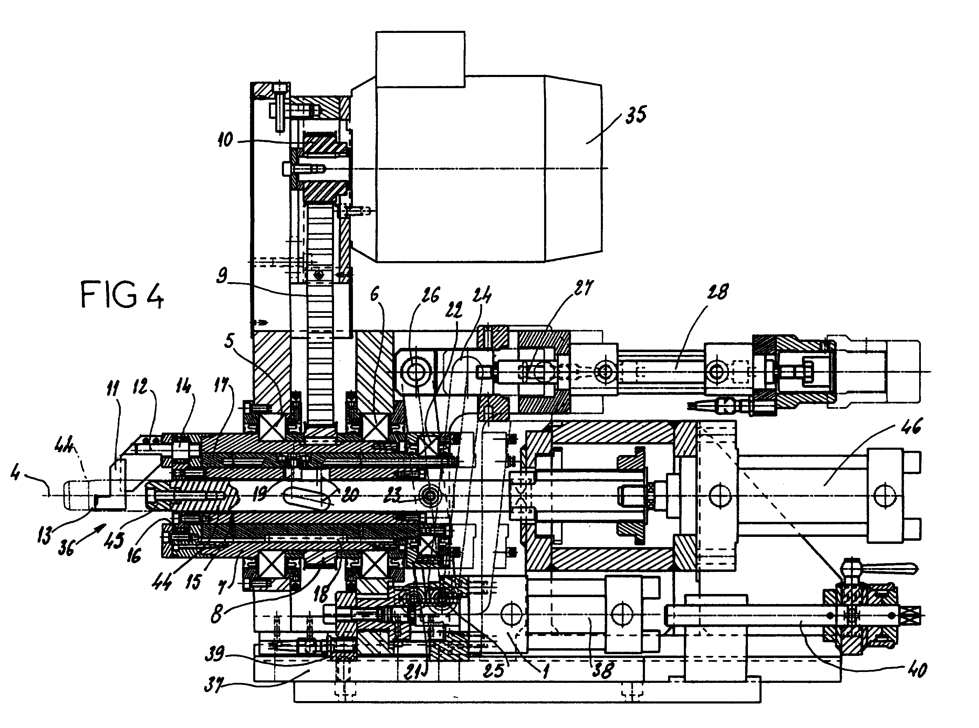

La figure 3 montre le détail des outils de coupe et/ou de chanfreinage 13, qui dans cet exemple se présentent comme des plaquettes de coupe à trois lobes actifs 32, chaque plaquette étant pourvue d'un trou central 33 permettant sa fixation, au moyen d'une vis 34, à l'extrémité d'un porte-outil oscillant 11. Une simple rotation de chaque plaquette de coupe 13, selon un angle de 120°, permet d'utiliser successivement ses trois lobes 32, en fonction de leur usure. La vis de fixation 34 permet aussi un remplacement facile d'une plaquette de coupe 13 par une autre.

La machine de coupe peut encore comprendre un dispositif de pulvérisation, prévu pour projeter de l'huile qui facilite l'opération de coupe du tube 29. Cette machine comprend aussi avantageusement un collecteur de copeaux, canalisant directement ces derniers vers un tiroir ou, en variante, vers un évacuateur motorisé. L'ensemble du mécanisme de coupe est conçu de manière à ce que toutes les parties mécaniques en mouvement soient étanches aux copeaux, aux huiles de coupe et aux produits de pulvérisation.

A cette machine de coupe de tubes peuvent être associés un chargeur de tubes, un banc d'amenage de tubes et un dispositif d'avance du tube à couper, par poussée, le dispositif d'avance comportant une motorisation hydraulique ou électromécanique.

Les figures 4 à 8 se rapportent à une autre forme de réalisation de cette machine, qui est adaptée aussi bien à la coupe de tubes qu'à l'usinage de tubes par déformation ou par enlèvement de matière.

Sur la figure 4, la machine est représentée équipée d'une tête de coupe 36 comportant seulement deux porte-outils 11 et deux outils de coupe et de chanfreinage 13, diamétralement opposés, le principe de la machine n'étant pas modifié et les éléments correspondant à ceux précédemment décrits en référence aux figures 1 à 3 étant désignés par les mêmes repères numériques. On notera toutefois que le moteur électrique 35 d'entraînement en rotation des fourreaux 7, 15 et 17 est ici situé dans la partie supérieure de la machine, ce qui permet de rendre le bâti 1 mobile longitudinalement, à la manière d'un chariot, sur des rails horizontaux inférieurs 37, par l'intermédiaire de patins à billes. Un vérin hydraulique 38 commande l'avance et le recul du bâti 1 et de l'ensemble des organes supportés par ce bâti, pour le positionnement, ceci en coopération avec une butée fixe 39 et avec une vis mécrométrique 40 de réglage.

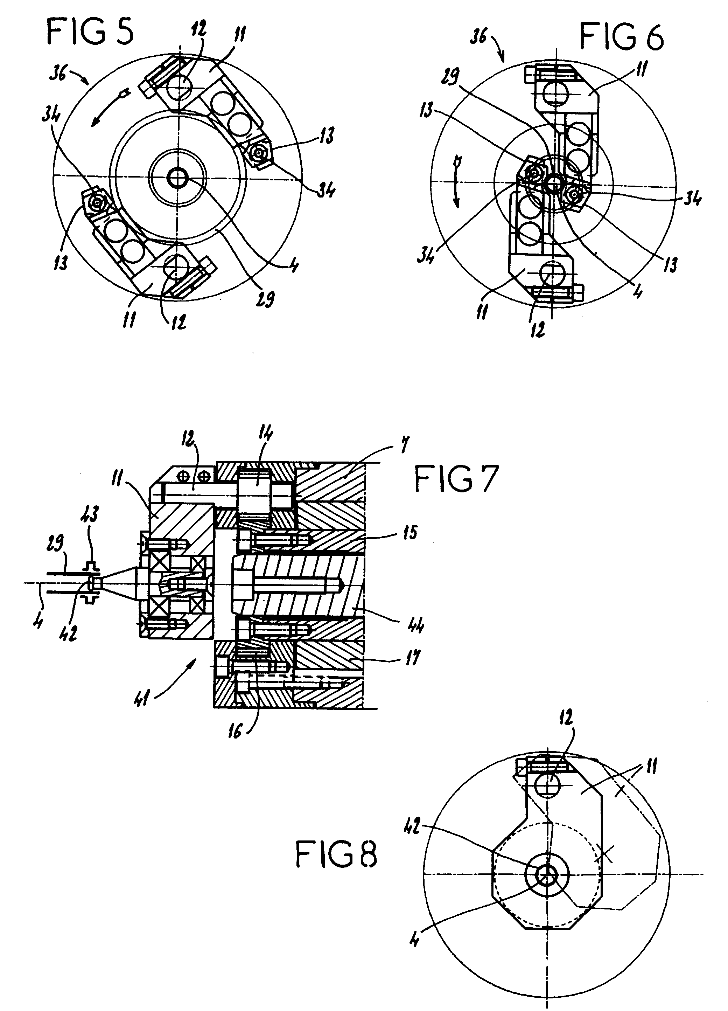

La figure 5 montre la tête de coupe 36 avec ses deux porte-outils 11 et les outils 13 relativement écartés, pour la coupe d'un tube 29 de relativement grand diamètre. La figure 6 montre la même tête de coupe 36 avec ses deux porte-outils 11 et les outils 13 rapprochés, pour la coupe d'un tube 29 de relativement petit diamètre. Comme le montrent ces figures, chaque outil 13 consiste ici en une plaquette de coupe et de chanfreinage symétrique, à deux arêtes de coupe opposées, fixée au moyen d'une vis centrale 34.

La tête de coupe 36 précédemment décrite est démontable du fourreau extérieur 7 et interchangeable, et elle peut être remplacée, comme le montrent les figures 7 et 8, par une autre tête 41 équipée d'un outil de formation de gorges 42 à l'intérieur d'une extrémité d'un tronçon de tube 29. Cette tête 41 comporte un unique porte-outil 11 monté oscillant autour d'un axe 12, et un unique pignon "satellite" 14 en prise avec la couronne dentée 16. Le porte-outil 11 supporte l'outil de formation de gorges 42, réalisé sous la forme d'une molette. Selon la position angulaire contrôlée du porte-outil 11, cet outil 42 peut être amené dans une position coaxiale au tube 29, pour son introduction, ou être excentré de manière à être pressé contre la paroi interne du tube 29, afin d'y creuser une gorge intérieure, en coopération avec une matrice fixe extérieure 43.

La machine représentée aux figures 4 à 8 est encore pourvue d'un arbre central 44, non rotatif mais mobile axialement, qui traverse de part en part le fourreau intérieur 15, et dont l'extrémité antérieure porte un outil d'évasage 45. L'extrémité postérieure de l'arbre 44 est attelée à un vérin de poussée 46, dont l'actionnement permet à l'outil 45 de réaliser, selon sa configuration, un chanfreinage intérieur et/ou un évasage de l'extrémité d'un tronçon de tube 29.

La machine de coupe et/ou d'usinage de tubes, objet de l'invention, peut être insérée dans une ligne de traitement de tubes, et elle peut intéresser toutes les industries ayant des tubes minces et délicats à couper. Une même machine est capable de couper des tronçons courts (bagues) ou des pièces longues, à partir de tubes métalliques, notamment des tubes en acier, en acier inoxydable (même réfractaire), en aluminium, en laiton, en cuivre, etc..., avec des cadences de coupe très rapides, et sans pour cela écrouir le métal. Des machines conformes à l'invention peuvent se monter très facilement, en lieu et place d'une scie volante, sur certaines lignes à tubes en particulier pour les tubes en acier inoxydable.

L'on ne s'éloignerait pas du cadre de l'invention en réduisant ou augmentant le nombre des outils de coupe, ou en modifiant des caractéristiques de détail telles que la forme des plaquettes de coupe, ou encore en ayant recours à tous équivalents : par exemple, le vérin hydraulique 28 du mécanisme commandant le mouvement axial du fourreau intermédiaire 17 est remplaçable par tout actionneur, en particulier par un moteur d'axe à commande numérique, et les pignons 14 solidaires des porte-outils 11 sont remplaçables par des secteurs dentés puisqu'ils n'effectuent qu'une rotation d'une fraction de tour. Enfin, la même machine reste, bien entendu, applicable aussi à la coupe de tubes non métalliques.

## Revendications

1. Machine pour la coupe et/ou l'usinage de tubes de section ronde et de relativement faible épaisseur, caractérisée en ce qu'elle comprend, en combinaison :
- des moyens de serrage (30,31) du tube à couper (29), fixant la position de l'axe (4) de ce tube (29),
- un fourreau rotatif intérieur (15) et une carcasse ou fourreau rotatif extérieur (7), montés coaxialement et pouvant être traversés par le tube à couper (29), le fourreau intérieur (15) étant apte à décrire une rotation limitée, relativement au fourreau extérieur (7),
- au moins un porte-outil (11) monté oscillant sur la carcasse ou fourreau extérieur (7), autour d'un axe (12) parallèle à l'axe (4) du tube à couper (29),
- un ou des outils de coupe et/ou d'usinage (13,42), monté(s) sur l'extrémité, tournée vers l'axe (4) du tube à couper (29), du ou des porte-outils(11),
- des moyens (8,9,10,35) d'entraînement en rotation continue de la carcasse ou fourreau extérieur (7) autour de son axe (4),
- des moyens de commande (17 à 28) de la position angulaire relative du fourreau intérieur (15) et de la carcasse ou fourreau extérieur (7),
- une couronne dentée (16) solidaire du fourreau intérieur (15), et venant en prise avec un ou des pignons (14) ou des secteurs dentés liés en rotation, respectivement, avec le ou les porte-outils (11).

2. Machine pour la coupe et/ou l'usinage de tubes selon la revendication 1, caractérisée en ce que les moyens de commande de la position angulaire relative du fourreau intérieur (17) et de la carcasse ou fourreau extérieur (7) comprennent un fourreau intermédiaire (17), mobile en translation axiale par rapport au fourreau extérieur (7) mais lié en rotation (en 18) avec ce dernier, tandis qu'une liaison de type hélicoïdal (19,20) réunit le fourreau intermédiaire (17) au fourreau intérieur (15), ledit fourreau intermédiaire (17) étant prolongé au delà des autres fourreaux (7,15), et son prolongement étant lié en translation, par l'intermédiaire d'un palier (22), avec une couronne de commande (21) non rotative, elle-même liée à un actionneur, tel que vérin hydraulique (27,28), apte à la déplacer en translation.

3. Machine pour la coupe et/ou l'usinage de tubes selon la revendication 2, caractérisé en ce que la couronne de commande (21) est articulée (en 23) à deux leviers de commande latéraux (24), opposés l'un à l'autre, qui sont eux-mêmes articulés d'une part (en 25) à des parties latérales (3) du bâti (1) de la machine, et d'autre part (en 26) à la partie mobile du vérin (28), telle que la tige (27) de ce vérin.

4. Machine pour la coupe et/ou l'usinage de tubes selon la revendication 2 ou 3, caractérisée en ce que la liaison de type hélicoïdal, réunissant le fourreau intermédiaire (17) au fourreau intérieur (15), résulte de doigts ou de galets (19), portés par le fourreau intermédiaire (17) et tournés vers l'intérieur de ce dernier, qui sont introduits dans des lumières obliques respectives (20) ménagées dans le fourreau intérieur (15).

5. Machine pour la coupe et/ou l'usinage de tubes selon l'une quelconque des revendications 1 à 4, caractérisée en ce qu'elle comprend une pluralité de porte-outils (11) montés oscillants à intervalles angulaires réguliers sur la carcasse ou fourreau extérieur (7), et une pluralité d'outils de coupe et/ou d'usinage (13) correspondants disposés en cercle dans un même plan (P), perpendiculaire à l'axe (4) du tube (29).

6. Machine pour la coupe et/ou l'usinage de tubes selon la revendication 5, caractérisée en ce que les porte-outils oscillants (11) se présentent chacun comme un bras de forme coudée, dont une extrémité reçoit un outil de coupe et/ou d'usinage (13).

7. Machine pour la coupe et/ou l'usinage de tubes selon la revendication 5 ou 6, caractérisée en ce que le nombre des porte-outils oscillants (11) et des outils de coupe et/ou d'usinage (13) est compris entre deux et dix.

8. Machine pour la coupe et/ou l'usinage de tubes selon l'une quelconque des revendications 5 à 7, caractérisée en ce que les outils de coupe et/ou d'usinage se présentent comme des plaquettes de coupe (13), fixées de façon démontable (vis 34) aux extrémités des porte-outils oscillants (11) respectifs.

9. Machine pour la coupe et/ou l'usinage de tubes selon la revendication 8, caractérisée en ce que lesdites plaquettes sont des plaquettes de coupe et de chanfreinage (13), adaptées pour l'usinage d'un chanfrein extérieur à l'extrémité d'un tronçon de tube.

10. Machine pour la coupe et/ou l'usinage de tubes selon la revendication 8 ou 9, caractérisée en ce que chaque plaquette de coupe et/ou de chanfreinage (13) se présente comme une plaquette à trois lobes actifs (32), pourvue d'un trou central (33) pour sa fixation au moyen d'une vis (34) à l'extrémité d'un porte-outil oscillant (11).

11. Machine pour la coupe et/ou l'usinage de tubes selon l'une quelconque des revendications 1 à 4, caractérisée en ce qu'elle comporte au moins un porte-outil oscillant (11) qui porte un outil (42) en forme de molette, prévu pour la formation de gorges à l'intérieur d'une extrémité d'un tronçon de tube (29).

12. Machine pour la coupe et/ou l'usinage de tubes selon l'une quelconque des revendications 1 à 11, caractérisée en ce qu'elle est pourvue d'un arbre central (44) non rotatif mais mobile axialement, qui traverse le fourreau intérieur (15) et dont l'extrémité antérieure porte un outil (45) de chanfreinage intérieur et/ou d'évasage d'une extrémité d'un tronçon de tube (29), l'extrémité postérieure de l'arbre (44) étant attelée à un vérin de poussée (46).
